# EUROPEAN PATENT APPLICATION

(11) **EP 4 576 507 A1**
(43) Date of publication of application: **25.06.2025**
(21) Application number: 23879581.9
(22) Date of filing: 02.10.2023
(51) Int. Cl.: H02K 3/28

(54) **ROTATING ELECTRIC MACHINE STATOR**

(30) Priority: 19.10.2022 JP 2022167302
(71) Applicant: AISIN CORPORATION, Kariya-shi, Aichi 448-8650 (JP)
(72) Inventor: TAKEMI, Tomohiko, Kariya-shi, Aichi 448-8650 (JP); KOGA, Kiyotaka, Kariya-shi, Aichi 448-8650 (JP); NOZAKI, Hiroyuki, Kariya-shi, Aichi 448-8650 (JP); KOBUCHI, Takahiro, Kariya-shi, Aichi 448-8650 (JP); MARUI, Daisuke, Kariya-shi, Aichi 448-8650 (JP)
(74) Representative: Kramer Barske Schmidtchen Patentanwälte PartG mbB
(86) International application number: PCT/JP2023/035862
(87) International publication number: WO 2024/084934

(57) **Abstract**

A stator for a rotating electrical machine is disclosed. The stator includes: a stator coil in which four or more sets of coil portions for each phase are connected as a parallel circuit between a neutral line terminal and a power line terminal for each phase; and a stator core that has a plurality of slots and around which the stator coil is wound. The stator coil includes slot insertion portions each inserted in a corresponding slot, and a crossover portion exposed from an axial end face of the stator core and extending in a circumferential direction so as to connect a pair of slot insertion portions. In each phase, a plurality of slot insertion portions in each set includes a first slot insertion portion directly connected to the power line terminal. The first slot insertion portion for each phase is located on a radially outermost side in a corresponding slot on one side in an axial direction of the stator core.

## Description

### TECHNICAL FIELD

The present disclosure relates to stators for rotating electrical machines.

### BACKGROUND ART

A technique is known in which, of both ends of a plurality of coil pieces forming a stator coil, one ends are installed on the radially outermost side of the stator core in slots, and the other ends are installed on the radially innermost side of the stator core in the slots.

### Related Art Documents

### Patent Documents

Patent Document 1: Japanese Unexamined Patent Application Publication No. 2019-201485 (JP 2019-201485 A)

### SUMMARY OF THE INVENTION

### Problem to be Solved by the Invention

In such related art as described above, it is necessary to route wires from the ends of the coil pieces on the radially innermost side radially outward (across a coil end in a radial direction) at a position radially outward of the coil end, which tends to lead to an increase in axial size of the stator coil. Particularly when the number of parallel-connected coil portions of each phase is four or more, the number of terminals increases. Therefore, such an arrangement of the terminals on the radially inner side tends to be used.

Therefore, in one aspect, an object of the present embodiment is to reduce the axial size of a stator while setting the number of parallel-connected coil portions of each phase to four or more.

### Means for Solving the Problem

One aspect provides a stator for a rotating electrical machine. The stator includes: a stator coil in which four or more sets of coil portions for each of phases are connected as a parallel circuit between a neutral line terminal and a power line terminal for each of the phases; and a stator core that has a plurality of slots and around which the stator coil is wound.

The stator coil includes
slot insertion portions each inserted in a corresponding one of the plurality of slots, and a crossover portion exposed from an axial end face of the stator core and extending in a circumferential direction so as to connect a pair of the slot insertion portions.

In each of the phases, a first slot insertion portion directly connected to the power line terminal out of a plurality of the slot insertion portions in each of the four or more sets is located on a radially outermost side in a corresponding one of the slots on one side in an axial direction of the stator core.

### Effects of the Invention

In the one aspect, the present embodiment can reduce the axial size of a stator while setting the number of parallel-connected coil portions of each phase to four or more.

### BRIEF DESCRIPTION OF THE DRAWINGS

[FIG. 1] FIG. 1 is a plan view of a rotating electrical machine (stator) according to an embodiment.
[FIG. 2] FIG. 2 is a circuit diagram of a three-phase coil connected in a Y-configuration according to the embodiment.
[FIG. 3] FIG. 3 is a perspective view of the stator according to the embodiment.
[FIG. 3A] FIG. 3A is a side view of the stator according to the embodiment.
[FIG. 3B] FIG. 3B is a top view of the stator according to the embodiment.
[FIG. 3C] FIG. 3C is a diagram illustrating the configuration of coil pieces that form a stator coil.
[FIG. 4] FIG. 4 is a diagram showing the configuration of a U1 coil of a U-phase coil.
[FIG. 5] FIG. 5 is a diagram showing the configuration of a U2 coil of the U-phase coil.
[FIG. 6] FIG. 6 is a diagram showing the configuration of a U3 coil of the U-phase coil.
[FIG. 7] FIG. 7 is a diagram showing the configuration of a U4 coil of the U-phase coil.
[FIG. 8] FIG. 8 is a diagram showing an arrangement of terminals for the U-phase coil.
[FIG. 9A] FIG. 9A is a diagram illustrating second crossover portions each connecting slot insertion portions of the first turn on the radially outermost side.
[FIG. 9B] FIG. 9B is a diagram illustrating third crossover portions each connecting slot insertion portions of the eighth turn on the radially innermost side.
[FIG. 10] FIG. 10 is a perspective view of a stator according to a comparative example.

### MODES FOR CARRYING OUT THE INVENTION

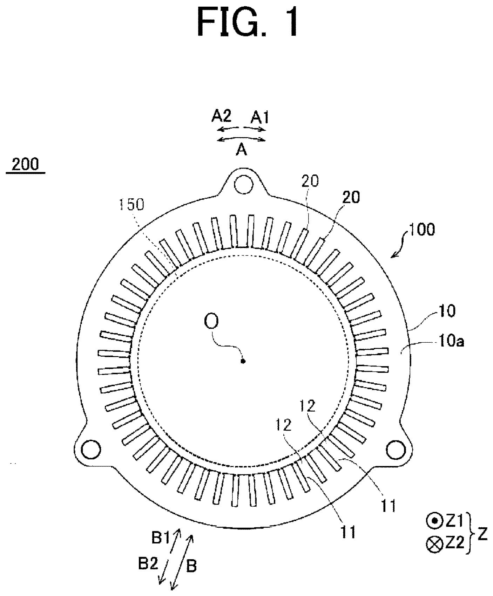

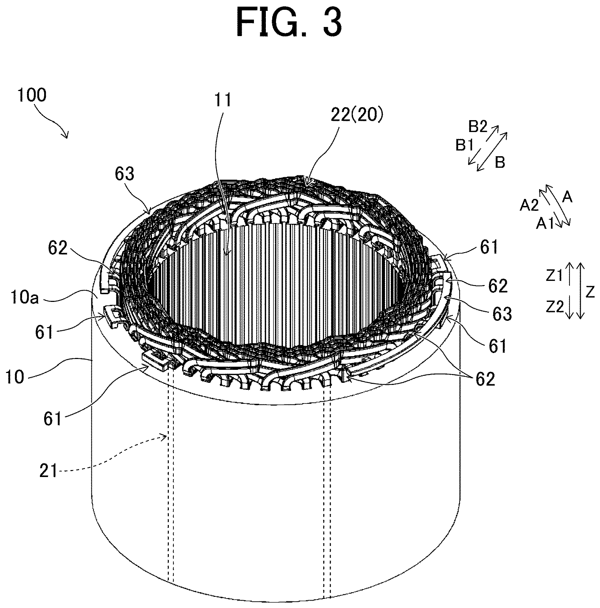

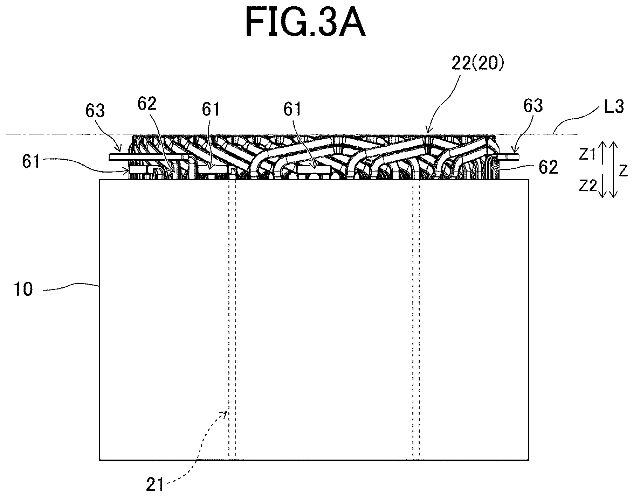

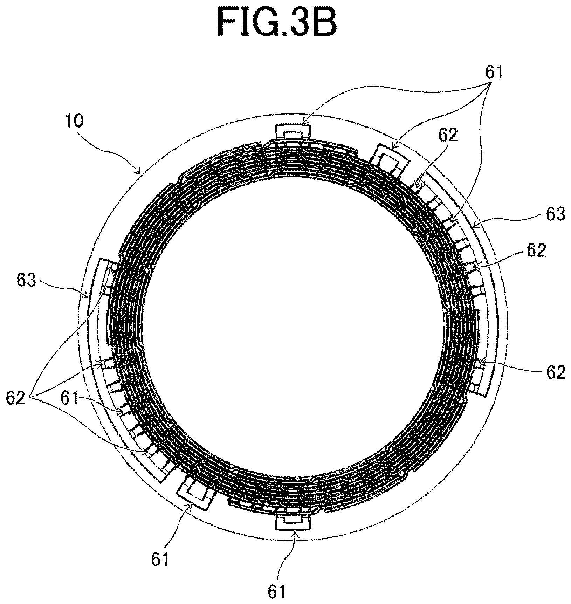

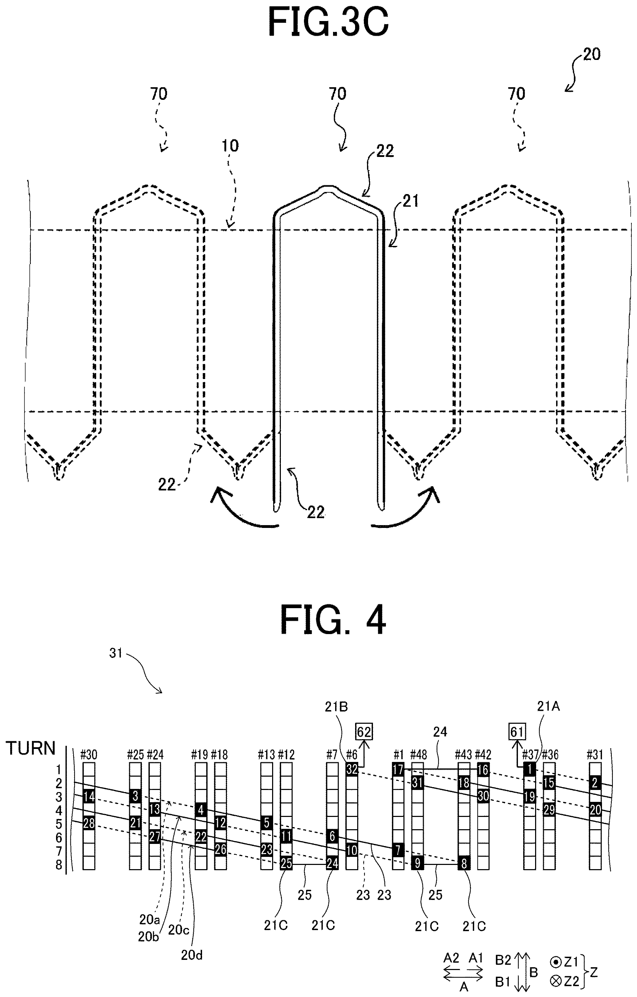

Embodiments will be described in detail below with reference to the accompanying drawings. The dimensional ratios in the drawings are merely illustrative, and are not limited to these. The shapes etc. in the drawings may be partially exaggerated for convenience of description. Regarding a plurality of the same components in FIG. 1 (and in FIG. 3 and the subsequent figures as well), only part of the components may be denoted with a sign for simplicity.

FIG. 1 is a plan view of a rotating electrical machine (stator) according to an embodiment.

In the present specification, the "axial direction" means a direction along an axis (sign O) of a stator core 10 (rotor 150) (Z direction: see FIG. 1). One side in the axial direction will be referred to as Z1 direction side, and the other side in the axial direction will be referred to as Z2 direction side. The "circumferential direction" means a circumferential direction of the stator core 10 (A direction). One side in the circumferential direction will be referred to as A1 direction, and the other side in the circumferential direction will be referred to as A2 direction. The "radial direction" means a radial direction about the axis of the stator core 10 (rotor 150) (B direction). The terms "radially inward" and "radially inner side" mean a direction toward the center of the stator core 10 (B1 direction). The terms "radially outward" and "radially outer side" mean a direction toward the outside of the stator core 10 (B2 direction).

As shown in FIG. 1, a rotating electrical machine 200 includes a stator 100 and the rotor 150. The stator 100 and the rotor 150 are each formed in an annular shape. The stator 100 and the rotor 150 face each other. The rotor 150 is disposed radially inward of (on the B1 direction side of) the stator 100. The rotor 150 is provided with a plurality of permanent magnets (not shown). That is, the rotating electrical machine 200 of the present embodiment is configured as an inner rotor type rotating electrical machine.

The stator 100 includes the stator core 10. The stator core 10 is disposed so as to face the rotor 150 in the radial direction. The stator core 10 has a plurality of (e.g., 48) slots 11. Teeth 12 are each located between adjacent ones of the slots 11. The stator core 10 is composed of, for example, a plurality of electrical steel laminations stacked in a direction of its central axis of rotation (Z1 direction and Z2 direction), and is configured to allow magnetic flux to pass therethrough. The stator core 10 may be formed by compression molding of magnetic powder. The stator core 10 includes end faces 10a on both its one side in the axial direction (Z1 direction side) and the other side in the axial direction (Z2 direction side). The stator 100 includes a stator coil 20.

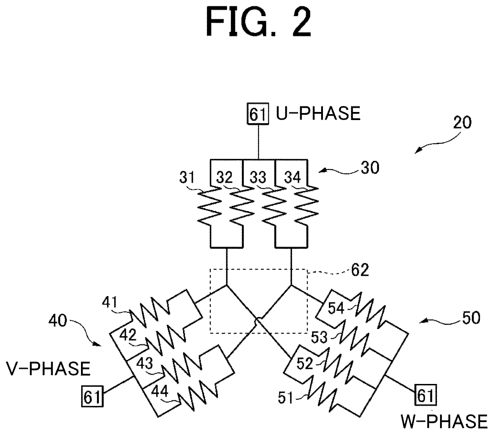

FIG. 2 is a circuit diagram of a three-phase coil connected in a Y-configuration according to the present embodiment.

As shown in FIG. 2, the stator coil 20 is connected to an external power supply unit, and is configured to be supplied with electric power (e.g. three-phase alternating current power). The stator coil 20 is configured to generate a magnetic field when supplied with electric power. The stator coil 20 includes a U-phase coil 30, a V-phase coil 40, and a W-phase coil 50 through which three-phase (U-phase, V-phase, and W-phase) alternating currents flow, respectively.

The U-phase coil 30 includes a U1 coil portion 31, a U2 coil portion 32, a U3 coil portion 33, and a U4 coil portion 34 that are connected in parallel with each other. The V-phase coil 40 includes a V1 coil portion 41, a V2 coil portion 42, a V3 coil portion 43, and a V4 coil portion 44 that are connected in parallel with each other. The W-phase coil 50 includes a W1 coil portion 51, a W2 coil portion 52, a W3 coil portion 53, and a W4 coil portion 54 that are connected in parallel with each other. The U-phase coil 30, the V-phase coil 40, and the W-phase coil 50 are connected in a Y-configuration (star configuration). That is, a so-called "4Y" configuration is implemented. Alternating current power for each of the U-phase, V-phase, and W-phase is input from a power line terminal 61 to the U-phase coil 30, the V-phase coil 40, and the W-phase coil 50, respectively. The output sides of the U-phase coil 30, V-phase coil 40, and W-phase coil 50 are connected to each other via a neutral line terminal 62.

FIG. 3 is a perspective view of the stator 100 according to the present embodiment. FIG. 3A is a side view of the stator 100 according to the present embodiment. FIG. 3B is a top view of the stator 100 according to the present embodiment. FIG. 3C is a diagram illustrating the configuration of coil pieces 70 that form the stator coil 20.

As shown in FIG. 3, the stator coil 20 is wound around the stator core 10. In the present embodiment, the stator coil 20 has a wave winding configuration in which a plurality of coil pieces 70 (FIG. 3C) is installed in each of the plurality of slots 11. Specifically, as shown in FIG. 3C, the stator coil 20 is formed as a wave-wound coil of conductor wires by connecting the plurality of coil pieces 70. Each of the plurality of coil pieces 70 may have an inverted U-shape as viewed with the Z1 side facing upward. Each of the plurality of coil pieces 70 may be in the form of a flat conductor wire having a rectangular cross section and coated with an insulating coating.

Each of the plurality of coil pieces 70 includes slot insertion portions 21 and crossover portions 22.

The slot insertion portions 21 extend in the axial direction (Z direction) and are placed in each of the plurality of slots 11.

The crossover portions 22 connect the plurality of slot insertion portions 21 to each other in pairs. That is, the crossover portions 22 each connect the slot insertion portions 21 installed in different slots 11. The crossover portions 22 are formed on both the Z2 direction side and the Z1 direction side. Regarding the shape of the crossover portions 22, each of a first crossover portion 23, a second crossover portion 24, and a third crossover portion 25, which will be described later, has a different shape.

As shown in FIG. 3C, after the coil pieces 70 are installed such that the slot insertion portions 21 are housed in each of the slots 11, the crossover portions 22 on the Z2 direction side may be bent outward in the circumferential direction and joined to the crossover portions 22 on the Z2 direction side of different coil pieces 70 by laser joining etc.

In the stator coil 20, the U-phase coil 30, the V-phase coil 40, and the W-phase coil 50 have substantially the same configuration. The U-phase coil 30 will be mainly described below.

The U-phase coil 30 is installed in the stator core 10 such that four sets, namely the U1 coil portion 31, the U2 coil portion 32, the U3 coil portion 33, and the U4 coil portion 34, form a parallel circuit. One end of each of the U1 coil portion 31, U2 coil portion 32, U3 coil portion 33, and U4 coil portion 34 is connected to the power line terminal 61. Alternating current power is supplied from the power line terminal 61. The other end of each of the U1 coil portion 31, U2 coil portion 32, U3 coil portion 33, and U4 coil portion 34 is connected to the neutral line terminal 62.

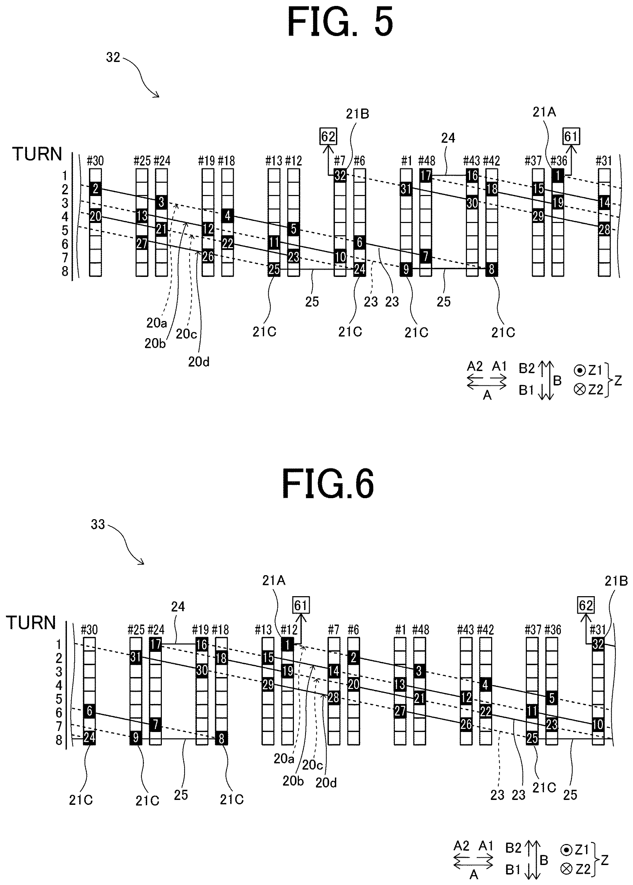

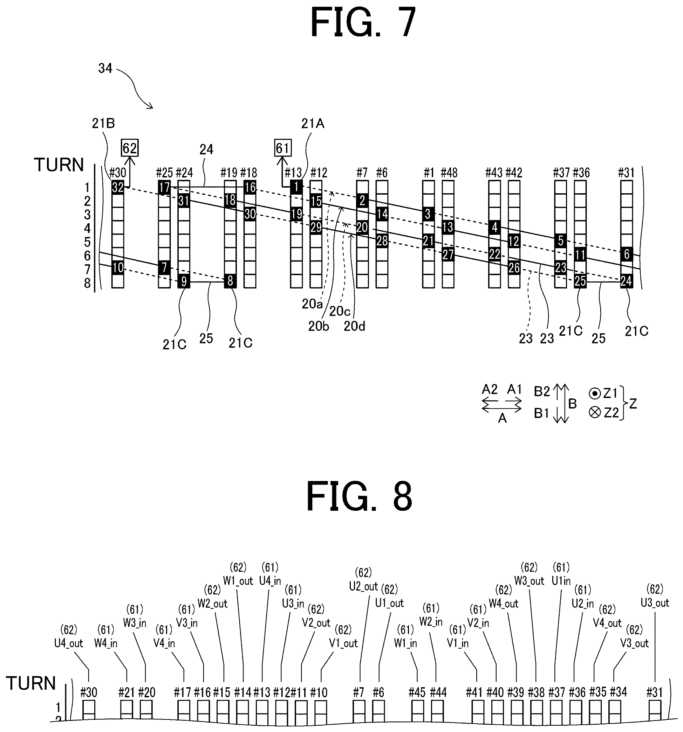

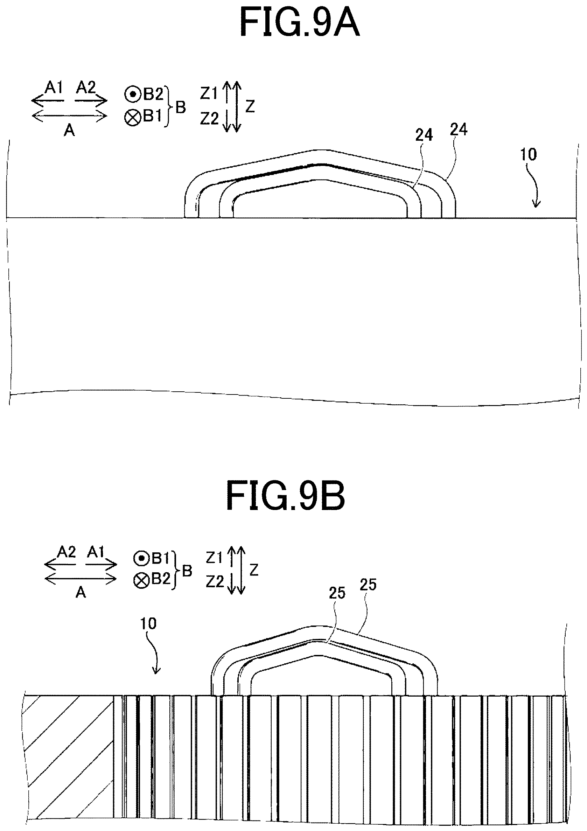

FIG. 4 is a diagram showing the configuration of the U1 coil portion 31 of the U-phase coil. FIG. 5 is a diagram showing the configuration of the U2 coil portion 32 of the U-phase coil. FIG. 6 is a diagram showing the configuration of the U3 coil portion 33 of the U-phase coil. FIG. 7 is a diagram showing the configuration of the U4 coil portion 34 of the U-phase coil. FIG. 8 is a diagram showing arrangement of terminals for the U-phase coil 30 (power line terminals 61 and neutral line terminals 62), illustrating only a radially outermost portion of the U-phase coil 30 (portion corresponding to one radially outermost turn). FIG. 9A is a diagram illustrating second crossover portions 24 each connecting the slot insertion portions 21 of the first turn on the radially outermost side. FIG. 9B is a diagram illustrating third crossover portions 25 each connecting the slot insertion portions 21 of the eighth turn on the radially innermost side.

As shown in FIGS. 4 to 7, the U1 coil portion 31, U2 coil portion 32, U3 coil portion 33, and U4 coil portion 34 of the U-phase coil 30 are installed in the following slots 11 out of the 48 slots 11: #1 (hereinafter, "#" represents the number of the slot 11), #6, #7, #12, #13, #18, #19, #24, #25, #30, #31, #36, #37, #42, #43, and #48. The slots 11 of #1 and #48, the slots 11 of #6 and #7, the slots 11 of #12 and #13, the slots 11 of #18 and #19, the slots 11 of #24 and #25, the slots 11 of #30 and #31, the slots 11 of #36 and #37, and the slots 11 of #42 and #43 are each two slots 11 that are adjacent to each other in the circumferential direction (A direction). Note that FIGS. 4 to 7 are diagrams of the annular stator core 10 shown opened out flat with the up-down direction being the radial direction of the stator core 10 (B direction) and the left-right direction being the circumferential direction of the stator core 10 (A direction). That is, the right and left ends shown in FIGS. 4 to 7 are continuous with each other. Although not shown in the figures, the V-phase coil 40 and the W-phase coil 50 are installed in the stator core 10 so as to be shifted from the U-phase coil 30 by two slots 11 and four slots 11, respectively.

A plurality of slot insertion portions 21 is housed next to each other in the radial direction of the stator core 10 (B direction) in each of the plurality of slots 11. Specifically, in the present embodiment, eight slot insertion portions 21 are arranged in a row in the radial direction in one slot 11. For example, in one slot 11, the slot insertion portion 21 installed on the outermost side (radially outer side: B2 direction side) is referred to as first turn (first layer), and the slot insertion portion 21 installed on the innermost side (radially inner side: B1 side) is referred to as eighth turn (eighth layer). In FIGS. 4 to 7, the slot insertion portions 21 are installed at positions shown by white numbers on black backgrounds so that a current (current that flows from the power supply unit toward the U-phase coil 30 out of the alternating currents) flows in the order of the white numbers.

In the present embodiment, the crossover portions 22 include first crossover portions 23, second crossover portions 24, and third crossover portions 25. In FIGS. 4 to 7, the crossover portions 22 (first crossover portions 23, second crossover portions 24, and third crossover portions 25) shown by continuous lines are located on the Z1 direction side of the stator core 10, and the crossover portions 22 (first crossover portions 23) shown by dashed lines are located on the Z2 direction side of the stator core 10. In FIGS. 4 to 7, the crossover portions 22 (first crossover portions 23, second crossover portions 24, and third crossover portions 25) are schematically shown as straight lines as viewed in the Z direction. However, the crossover portions 22 (first crossover portions 23, second crossover portions 24, and third crossover portions 25) may have a curved shape as viewed in the Z direction.

The first crossover portions 23 each connects a pair of slot insertion portions 21 installed at different positions in the radial direction (B direction) out of the plurality of slot insertion portions 21 housed in different slots 11. Specifically, the first crossover portions 23 connect the slot insertion portions 21 so that the radial positions (turn numbers) of the connected slot insertion portions 21 are gradually changed in order toward one side in the radial direction. That is, the first crossover portions 23 connect the slot insertion portions 21 in pairs so that their turn numbers increase toward the one side in the circumferential direction (A1 direction side). Such first crossover portions 23 and slot insertion portions 21 form four wave winding portions each wave-wound around the stator core 10, namely a wave winding portion 20a, a wave winding portion 20b, a wave winding portion 20c, and a wave winding portion 20d.

In the present embodiment, in each of the wave winding portions 20a to 20d, a plurality of first crossover portions 23 and slot insertion portions 21 are connected to each other, so that the slot insertion portion 21 installed on the radially outermost side (first turn) to the slot insertion portion 21 installed on the radially innermost side (eighth turn) are connected in order. That is, the plurality of first crossover portions 23 connects the slot insertion portions 21 in pairs so that the radial positions of the connected slot insertion portions 21 are gradually changed in order from the slot insertion portion 21 installed at the position of the first turn, namely at the end on the other side in the radial direction (e.g., the B2 direction side) of the slot 11, to the slot insertion portion 21 installed at the position of the eighth turn, namely at the end on the one side in the radial direction (e.g., the B1 direction side) of the slot 11. In the present embodiment, the first crossover portions 23 each connect a pair of slot insertion portions 21 installed at positions shifted outward or inward in the radial direction (B direction) from each other by one out of the slot insertion portions 21 installed in different slots 11. That is, in each of the wave winding portions 20a to 20d, the first crossover portions 23 connect the slot insertion portions 21 so that the connected slot insertion portions 21 are shifted by one turn in order from the eighth turn to the first turn.

The wave winding portions 20a to 20d are provided so as to form at least one lap (two laps in the present embodiment). One wave winding portion 20a is wave-wound along the one side in the circumferential direction of the stator core 10 (e.g., the A1 direction) toward the one side in the circumferential direction by the slot insertion portions 21 and the first crossover portions 23. The wave winding portion 20b connected to the wave winding portion 20a is wave-wound along the other side in the circumferential direction (e.g., the A2 direction), namely the opposite side to the side along which the wave winding portion 20a is wave-wound, toward the other side in the circumferential direction. Similarly, the wave winding portion 20c and the wave winding portion 20d are also wave-wound toward the one side and the other side in the circumferential direction, respectively. Each of the U1 coil portion 31, U2 coil portion 32, U3 coil portion 33, and U4 coil portion 34 of the U-phase coil 30 in the stator coil 20 is formed by connecting the wave winding portion 20a, the wave winding portion 20b, the wave winding portion 20c, and the wave winding portion 20d in this order. That is, each of the U1 coil portion 31, the U2 coil portion 32, the U3 coil portion 33, and the U4 coil portion 34 is installed in the stator core 10 so as to be folded back three times in the circumferential direction.

In the present embodiment, the wave winding portions 20a to 20d are connected to each other by either the second crossover portion 24 or the third crossover portion 25. Each of the second crossover portion 24 and the third crossover portion 25 connects a pair of slot insertion portions 21 installed at the same radial position (turn number) out of the plurality of slot insertion portions 21 housed in different slots 11. Specifically, the second crossover portion 24 connects the slot insertion portions 21 installed on the radially outermost side (first turn) in each of a plurality of slots 11. The third crossover portion 25 connects the slot insertion portions 21 installed on the radially innermost side (eighth turn) in each of a plurality of slots 11. The slot insertion portions 21 are connected in pairs by the second crossover portion 24 or the third crossover portion 25. Therefore, the wave winding portions 20a to 20d formed by the first crossover portions 23 and the slot insertion portions 21 are connected so that one and the other of the wave winding portions forming one lap are folded back. For example, in the U1 coil portion 31, four wave winding portions 20a to 20d, one second crossover portion 24, and two third crossover portions 25 form one wave-wound conductor folded back a plurality of times.

Specifically, as shown in FIG. 4, in the U1 coil portion 31, the power line terminal 61 is connected to the slot insertion portion 21 installed on the radially outermost side (first turn) (portion shown by the white number 1) in the slot 11 of #37. The power line terminal 61 may be in the form of an end of a coil piece 70, or may be in the form of a separate member joined to an end of a coil piece 70. After the slot insertion portion 21 extends in the Z2 direction along the slot 11, a first crossover portion 23 extends from #37 to #31 as a crossover portion 22 on the Z2 direction side. On the Z2 direction side of the stator core 10, the first crossover portion 23 is connected to the slot insertion portion 21 of the second turn (portion shown by the number 2) that is one turn inside from the radially outermost turn in the slot 11 of #31. Thereafter, first crossover portions 23 are connected to slot insertion portions 21 alternately on the Z1 direction side and the Z2 direction side in the order of the third turn in the slot 11 of #25, the fourth turn in the slot 11 of #19, and the fifth turn in the slot 11 of #13, and are connected up to the slot insertion portion 21 of the eighth turn in the slot 11 of #43 (portion shown by the number 8) in such a manner that the turn number increases in increments of one toward the inner side for each connection. The wave winding portion 20a is thus formed by connecting eight slot insertion portions 21 and seven first crossover portions 23.

A third crossover portion 25 is provided on the Z1 direction side of the stator core 10 from the slot insertion portion 21 of the eighth turn in the slot 11 of #43 (portion shown by the white number 8) to the slot insertion portion 21 of the eighth turn in the slot 11 of #48 (portion shown by the number 9) so as to make a fold. After being folded back by the third crossover portion 25 to change the direction to the A2 direction side in the circumferential direction, the wave winding portion 20b is formed in the same manner as that of the wave winding portion 20a from the slot 11 of #48 in which the portion shown by the number 9 is provided to the slot 11 of #42. A second crossover portion 24 is provided on the Z1 direction side of the stator core 10 from the slot insertion portion 21 of the first turn in the slot 11 of #42 (portion shown by the number 16) to the slot insertion portion 21 of the first turn in the slot 11 of #1 (portion shown by the number 17). The U1 coil portion 31 is thus folded back from the wave winding portion 20b to the wave winding portion 20c. Thereafter, the U1 coil portion 31 is similarly folded back from the wave winding portion 20c to the wave winding portion 20d by a third crossover portion 25. One U1 coil portion 31 is thus formed by the four wave winding portions 20a to 20d folded back three times. The neutral line terminal 62 is connected to the wave winding portion 20d at the slot insertion portion 21 of the first turn in the slot 11 of #6 (portion shown by the number 32). The neutral line terminal 62 may be in the form of an end of a coil piece 70, or may be in the form of a separate member joined to an end of a coil piece 70.

The first crossover portions 23 thus connect the second turn to the third turn, the fourth turn to the fifth turn, and the sixth turn to the seventh turn, and are disposed on the Z1 direction side. The second crossover portion 24 connecting the first turns and the third crossover portions 25 connecting the eighth turns are all disposed on the Z1 direction side. The power line terminal 61 and the neutral line terminal 62 are also connected on the Z1 direction side.

In the following description, regarding the plurality of slot insertion portions 21, when distinguishing the slot insertion portion 21 that is directly connected to the power line terminal 61 (in the U1 coil portion 31, the slot insertion portion 21 inserted in the slot 11 of #37) from the other slot insertion portions 21, this slot insertion portion 21 will also be referred to as "first slot insertion portion 21A." Regarding the plurality of slot insertion portions 21, when distinguishing the slot insertion portion 21 that is directly connected to the neutral line terminal 62 (slot insertion portion 21 inserted in the slot 11 of #6) from the other slot insertion portions 21, this slot insertion portion 21 will also be referred to as "second slot insertion portion 21B." Regarding the plurality of slot insertion portions 21, when distinguishing the slot insertion portions 21 inserted on the radially innermost side (eighth turn) in the slots 11 (slot insertion portions 21 inserted in the slots 11 of #7, #12, #43, and #48) from the other slot insertion portions 21, these slot insertion portions 21 will also be referred to as "third slot insertion portions 21C."

In the present embodiment, as described above, each slot insertion portion 21 along the direction of the current flow from the first slot insertion portion 21A to the second slot insertion portion 21B is inserted in a corresponding slot 11 in such a manner that the trend of change (increase and decrease) of the slot number is reversed at least once (in this example, three times). The "slot number" as used herein increases relatively in order clockwise or counterclockwise in the circumferential direction of the stator core 10 as viewed in the axial direction. In the case of the present embodiment, when #1 to #48 correspond to slot numbers, the direction in which the number increases in increments of one from #1 to #48 corresponds to the direction in which the slot number increases, and the direction in which the number changes from #48 via #1 also corresponds to the direction in which the slot number increases. The direction in which the number decreases in increments of one from #48 to #1 corresponds to the direction in which the slot number decreases, and the direction in which the number changes from #1 via #48 also corresponds to the direction in which the slot number decreases.

Particularly in the present embodiment, in each of the U1 coil portion 31, U2 coil portion 32, U3 coil portion 33, and U4 coil portion 34, the direction of increase and decrease of the slot number of each slot insertion portion 21 along the direction of the current flow from the first slot insertion portion 21A to the second slot insertion portion 21B is reversed starting at the third slot insertion portion 21C. For example, in the case of the U1 coil portion 31, each slot insertion portion 21 is inserted in a corresponding slot in such a manner that the slot number decreases from the first slot insertion portion 21A to the first third slot insertion portion 21C in the direction of the current flow (third slot insertion portion 21C inserted in the slot 11 of #43) and that the slot number increases from the last third slot insertion portion 21C in the direction of the current flow (third slot insertion portion 21C inserted in the slot 11 of #12) to the second slot insertion portion 21B.

In the present embodiment, in each of the U1 coil portion 31, U2 coil portion 32, U3 coil portion 33, and U4 coil portion 34, the radial position of each slot insertion portion 21 along the direction of the current flow from the first slot insertion portion 21A to the second slot insertion portion 21B is changed regularly. For example, in the case of the U1 coil portion 31, when the slot number decreases, the radial position in the slot 11 is shifted radially inward by one turn (see the first crossover portions 23). When the slot number increases, the radial position in the slot 11 is shifted radially outward by one turn (see the first crossover portions 23) or the same radial position is maintained (see the second crossover portion 24 and the third crossover portions 25).

As shown in FIGS. 5 to 7, like the U1 coil portion 31, each of the U2 coil portion 32, U3 coil portion 33, and U4 coil portion 34 is also configured as part of the wave-wound stator coil 20 folded back a plurality of times by folding back the four wave winding portions 20a to 20d.

Particularly in the present embodiment, in each of the U2 coil portion 32, U3 coil portion 33, and U4 coil portion 34, the power line terminal 61 and the neutral line terminal 62 are both disposed on the radially outer side, as in the U1 coil portion 31. That is, as shown in FIG. 8, the power line terminals 61 and neutral line terminals 62 of each phase are all disposed radially outward of the stator core 10. In FIG. 8, the symbols U, V, and W represent the phases, and the numerals 1 to 4 following the symbols U, V, and W represent the corresponding one of the four sets. For example, U1 to U4 represent the U1 coil portion 31, the U2 coil portion 32, the U3 coil portion 33, and the U4 coil portion 34, respectively. Moreover, "_in" and "_out" at the end represent the power line terminal 61 and the neutral line terminal 62, respectively.

In the present embodiment, regarding the U-phase coil 30, the power line terminals 61 for the U1 coil portion 31 and U2 coil portion 32 and the power line terminals 61 for the U3 coil portion 33 and U4 coil portion 34 are set at diagonal positions in the circumferential direction, as shown in FIG. 3B. The same applies to the V-phase coil 40 and the W-phase coil 50.

In the present embodiment, the first crossover portions 23 that form one of the wave winding portions forming one lap out of the wave winding portions 20a to 20d and the first crossover portions 23 that form the other of the wave winding portions forming the lap connect the slot insertion portions 21 in pairs so that the radial positions of the connected slot insertion portions 21 are changed gradually (like a slope) and parallel to each other. The number (pitch) of slots 11 across which each first crossover portion 23 extends is the same in each of the plurality of wave winding portions 20a to 20d. Specifically, each of the first crossover portions 23 extends across five slots 11 to connect the slot insertion portions 21 while shifting the turn by one. In other words, in each of the plurality of wave winding portions 20a to 20d, the pitch of all the first crossover portions 23 is "6." The first crossover portions 23 have the same pitch both on the one side (Z1 direction side) and the other side (Z2 direction side) of the stator core 10. As used herein, the term "parallel" means that the radial positions of the slot insertion portions 21 connected to the first crossover portions 23 are parallel in a state in which the slot insertion portions 21 are installed along the circumferential direction. That is, this means that the positions of the slot insertion portions 21 are parallel when the annular stator core 10 is shown opened out flat as in FIGS. 4 to 7.

The second crossover portions 24 and the third crossover portions 25 each have two different pitches, namely a pitch of 5 and a pitch of 7. For example, in the U1 coil portion 31 of FIG. 4, a second crossover portion 24 having a pitch of 7 is provided between the slots 11 of #42 and #1, and third crossover portions 25 having a pitch of 5 are provided between the slots 11 of #43 and #48 and between the slots 11 of #7 and #12. In the U2 coil portion 32 of FIG. 5, on the other hand, a second crossover portion 24 having a pitch of 5 is provided between the slots 11 of #43 and #48, and third crossover portions 25 having a pitch of 7 are provided between the slots 11 of #42 and #1 and between the slots 11 of #6 and #13.

As shown in FIGS. 9A and 9B, the second crossover portions 24 or the third crossover portions 25 that are connected to the slot insertion portions 21 installed in the same slots 11 and that have different pitches are disposed so as to overlap each other as viewed in the axial direction (Z direction). The second crossover portion 24 or the third crossover portion 25 that has a larger pitch is disposed above (on the Z1 direction side of) the second crossover portion 24 or the third crossover portion 25 that has a smaller pitch. Specifically, the second crossover portion 24 and the third crossover portion 25 that have a pitch of 7 are disposed so as to cover, from above, the second crossover portion 24 and the third crossover portion 25 that have a pitch of 5, respectively.

As shown in FIGS. 4 to 7, the slot insertion portions 21 that form one of the wave winding portions forming one lap out of the wave winding portions 20a to 20d and the slot insertion portions 21 that form the other of the wave winding portions forming the lap are installed in adjacent slots 11. The U-phase coil 30, the V-phase coil 40, and the W-phase coil 50 are alternately installed in pairs of adjacent slots 11 along the radial direction.

For example, in the U1 coil portion 31 of the U-phase in FIG. 4, the slot insertion portions 21 forming the wave winding portions 20a to 20d are housed in pairs of slots 11 that are adjacent to each other in the circumferential direction, namely #1 and #48, #6 and #7, #12 and #13, #18 and #19, #24 and #25, #30 and #31, #36 and #37, and #42 and #43. In adjacent ones of the wave winding portions 20a to 20d (wave winding portions forming one lap), the slot insertion portions 21 are alternately installed in different slots 11. The U-phase U2 coil portion 32, U3 coil portion 33, and U4 coil portion 34 in FIGS. 5 to 7 are installed in the same manner as that of the U-phase U1 coil portion 31. The positional relationship with the permanent magnets, not shown, of the rotor 150 is therefore less likely to become uneven among the U1 coil portion 31, U2 coil portion 32, U3 coil portion 33, and U4 coil portion 34 of the U-phase.

In the present embodiment, the stator coil 20 is formed using seven types of coil pieces 70. That is, the following coil pieces 70 are used: three types of coil pieces 70 that form a pair of slot insertion portions 21 and a first crossover portion 23, two types of coil pieces 70 that form a pair of slot insertion portions 21 and a second crossover portion 24, and two types of coil pieces 70 that form a pair of slot insertion portions 21 and a third crossover portion 25. The three types of coil pieces 70 that form a pair of slot insertion portions 21 and a first crossover portion 23 are the following three types of coil pieces 70: a coil piece 70 whose first crossover portion 23 connects the second turn and the third turn on the Z1 direction side, a coil piece 70 whose first crossover portion 23 connects the fourth turn and the fifth turn on the Z1 direction side, and a coil piece 70 whose first crossover portion 23 connects the sixth turn and the seventh turn on the Z1 direction side. The two types of coil pieces 70 that form a pair of slot insertion portions 21 and a second crossover portion 24 and the two types of coil pieces 70 that form a pair of slot insertion portions 21 and a third crossover portion 25 each have two different pitches, namely 5 and 7.

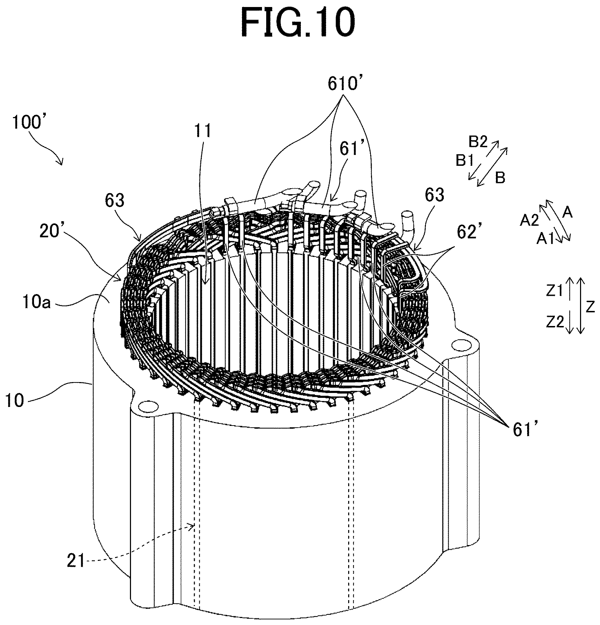

Effects of the present embodiment will be described with reference to a comparative example shown in FIG. 10 for comparison.

FIG. 10 is a perspective view of a stator 100' according to the comparative example. The stator 100' according to the comparative example is different in that part of power line terminals 61' and neutral line terminals 62' are disposed radially inward of the stator core 10.

In such a comparative example, as described above in the section "Problem to be Solved by the Invention," it is necessary to route wires from the radially innermost power line terminals 61' (see, for example, cables 610' in FIG. 10) radially outward (across a coil end in the radial direction) at a position radially outward of the coil end, which tends to lead to an increase in axial size of the stator 100' due to the stator coil 20'. Particularly when the number of parallel-connected coil portions of each phase is four or more as in the present embodiment, the number of terminals increases. Therefore, such an arrangement of the terminals on the radially inner side tends to be used.

According to the present embodiment, on the other hand, as described above, the power line terminals 61 and neutral line terminals 62 of each phase are all disposed radially outward of the stator core 10. This configuration can avoid the disadvantage that occurs when at least one power line terminal 61 is disposed on the radially inner side. That is, unlike the comparative example described above with reference to FIG. 10, an increase in axial size of the stator 100 due to the stator coil 20 can be prevented. In other words, the present embodiment can reduce the axial size of the stator 100 while setting the number of parallel-connected coil portions of each phase to four.

Therefore, according to the present embodiment, as shown in FIG. 3A, the power line terminals 61 can be disposed axially inward of the axially outermost position of the crossover portions 22 (i.e., the axially outermost position of the coil end, see line L3) as viewed in the radial direction. This can prevent an increase in axial size of the stator 100 due to the power line terminals 61, and thus can reduce the axial size of the stator 100. In this case, wires connected to the power line terminals 61, namely wires connected to an inverter, not shown (e.g., wires in the form of a cable) can also be disposed axially inward of the axially outermost position of the crossover portions 22 as viewed in the radial direction.

According to the present embodiment, as shown in FIG. 3A (and FIG. 3), the neutral line terminals 62 and neutral point busbars 63 connecting the neutral line terminals 62 can be disposed axially inward of the axially outermost position of the crossover portions 22 (i.e., the axially outermost position of the coil end, see line L3) as viewed in the radial direction. This can prevent an increase in axial size of the stator 100 due to the neutral line terminals 62 and the neutral point busbars 63 connecting the neutral line terminals 62, and thus can reduce the axial size of the stator 100.

The present embodiment has the following effects in addition to the above effects.

In the present embodiment, as described above, the first crossover portions 23 form the wave winding portions 20a to 20d that are wave-wound around the stator core 10 together with the slot insertion portions 21 by connecting the slot insertion portions 21 in pairs so that the radial positions of the connected slot insertion portions 21 are gradually changed in order toward the one side in the radial direction. It is therefore possible to connect the slot insertion portions 21 without providing a portion where the radial position of the connected slot insertion portions 21 is switched at an intermediate position, unlike the case where radially adjacent slot insertion portions 21 are alternately connected in each of the plurality of slots 11. This can reduce an increase in number of shapes of the coil pieces 70 on the one side in the axial direction of the stator core 10, and can thus reduce an increase in number of types of coil pieces 70 for forming the stator coil 20. In the present embodiment, as described above, the second crossover portion 24 and the third crossover portion 25 connect the slot insertion portions 21 in pairs, so that one and the other of the wave winding portions forming one lap out of the wave winding portions 20a to 20d formed by the first crossover portions 23 and the slot insertion portions 21 are connected so as to be folded back. The second crossover portion 24 and the third crossover portion 25, each connecting the slot insertion portions 21 installed at the same radial position in the slots 11, can thus connect the wave winding portions 20a to 20d so as to fold back the wave winding portions 20a to 20d. This can prevent the shape of the folded-back portions from becoming complicated.

In the present embodiment, as described above, one and the other of the wave winding portions forming one lap out of the wave winding portions 20a to 20d are installed so that the radial positions of the connected slot insertion portions 21 are changed gradually and parallel to each other. Therefore, the conductors (coil pieces 70) having the same shape can be used as conductors forming one of the wave winding portions forming one lap out of the wave winding portions 20a to 20d and conductors forming the other wave winding portion. This can reduce the number of types of coil pieces 70 for forming the stator coil 20, even when the wave winding portions forming one lap out of the wave winding portions 20a to 20d are connected so as to be folded back.

In the present embodiment, as described above, the wave winding portions 20a to 20d can be formed so that the slot insertion portions 21 that are connected progressively from the end on the one side in the radial direction toward the end on the other side in the radial direction are installed in each of a plurality of slots 11. Therefore, the ends of the wave winding portions 20a to 20d can be disposed on the radially outermost side. Therefore, in the case where the power line terminals 61 or the neutral line terminals 62 etc. are connected to the stator coil 20, the manufacturing process is less likely to become complicated compared to the case where the power line terminals 61 or the neutral line terminals 62 etc. are connected to intermediate portions of the conductors (coil pieces 70) in the slots 11.

In the present embodiment, as described above, the wave-wound stator coil 20 folded back a plurality of times is formed using the plurality of wave winding portions 20a to 20d, the second crossover portions 24 (outermost coil end portion), and the third crossover portions 25 (innermost coil end portion). Therefore, the stator coil 20 can be formed so as to be wave-wound by folding back a plurality of times on each of the radially innermost and outermost sides in the slots 11. Accordingly, even when a large number of slot insertion portions 21 is housed in one slot 11, the stator coil 20 can be formed by folding back a plurality of times on each of the radially innermost and outermost sides in the slots 11. This can reduce an increase in number of types of coil pieces 70 that form the stator coil 20.

In the present embodiment, as described above, the stator coil 20 can be formed by connecting pairs of slot insertion portions 21 installed at positions shifted outward or inward in the radial direction from each other by one. Therefore, the slot insertion portions 21 can be densely installed in each of the plurality of slots 11. Accordingly, the slot insertion portions 21 can be connected in pairs so that the radial positions of the connected slot insertion portions 21 are gradually changed in order toward the one side in the radial direction, while allowing efficient connection of the plurality of slot insertion portions 21 installed in the slots 11.

In the case where the slot insertion portions 21 are installed in the same slots 11 in both one and the other of the wave winding portions forming one lap out of the wave winding portions 20a to 20d, the positional relationship of the stator coil 20 with the magnets installed in the rotor 150 facing the stator 100 becomes uneven. Therefore, currents flowing through the wave winding portions 20a to 20d become uneven. In view of this, in the present embodiment, as described above, the slot insertion portions 21 forming one of the wave winding portions forming one lap out of the wave winding portions 20a to 20d and the slot insertion portions 21 forming the other of the wave winding portions forming the lap out of the wave winding portions 20a to 20d are installed in adjacent slots 11. Therefore, currents flowing through the wave winding portions 20a to 20d are less likely to become uneven.

Although the embodiments are described in detail above, the present disclosure is not limited to the specific embodiments, and various modifications and changes can be made within the scope of the claims. It is also possible to combine all or part of the constituent elements of the embodiments described above.

For example, in the above embodiment, all of the neutral line terminals 62 are also disposed on the radially outer side. However, part or all of the neutral line terminals 62 may be disposed radially inward of the stator core 10. That is, part or all of the second slot insertion portions 21B may be installed on the radially outermost side in the slots 11.

The above embodiment illustrates an example in which the first crossover portions 23 that form one of the wave winding portions forming one lap out of the wave winding portions 20a to 20d and the first crossover portions 23 that form the other wave winding portion are provided so that the radial positions of the connected slot insertion portions 21 are changed gradually and parallel to each other. However, the present disclosure is not limited to this. For example, the radial positions of the slot insertion portions 21 in one of the wave winding portions forming one lap may not be parallel to the radial positions of the slot insertion portions 21 in the other wave winding portion.

The above embodiment illustrates an example in which the wave winding portions 20a to 20d are folded back on the radially outermost and innermost sides. However, the present disclosure is not limited to this. For example, the wave winding portions 20a to 20d may be folded back at an intermediate position in the radial direction.

The above embodiment illustrates an example in which the stator coil 20 folded back three times is formed using the four wave winding portions 20a to 20d. However, the present disclosure is not limited to this. For example, the stator coil 20 may be configured to be folded back once using two wave winding portions.

The above embodiment illustrates an example in which the first crossover portions 23 each connect a pair of slot insertion portions 21 installed at positions shifted outward or inward in the radial direction from each other by one out of the slot insertion portions 21 installed in different slots 11. However, the present disclosure is not limited to this. For example, the first crossover portions 23 may each connect the slot insertion portions installed at positions shifted from each other by two or more slot insertion portions. That is, the slot insertion portions installed at positions shifted from each other by two or more turns may be connected to each other.

The above embodiment illustrates an example in which the slot insertion portions 21 that form one of the wave winding portions forming one lap out of the wave winding portions 20a to 20d and the slot insertion portions 21 that form the other wave winding portion are installed in adjacent slots 11. However, the present disclosure is not limited to this. For example, the slot insertion portions that form one of the wave winding portions forming one lap and the slot insertion portions that form the other of the wave winding portions forming the lap may be installed in the same slots. Alternatively, the slot insertion portions that form one of the wave winding portions forming one lap and the slot insertion portions that form the other of the wave winding portions forming the lap may be installed in the slots separated from each other.

The above embodiment illustrates an example in which the stator coil 20 is formed by the inverted U-shaped coil pieces 70. However, the present disclosure is not limited to this. For example, bar-shaped coil pieces may be installed as slot insertion portions in the slots, and the bar-shaped coil pieces may then be joined to separate coil pieces to form coil end portions. Alternatively, a coil portion may be formed by combining inverted U-shaped coil pieces and U-shaped coil pieces from one side and the other side in the axial direction of the stator core 10.

The above embodiment illustrates an example in which each of the U-phase coil 30, V-phase coil 40, and W-phase coil 50 forms a coil with a four-parallel configuration. However, the present disclosure is not limited to this. For example, each of the U-phase coil, V-phase coil, and W-phase coil may have a six- or more parallel-connection configuration such as a six- or eight-parallel connection configuration.

The above embodiment illustrates an example in which the stator core 10 is provided with 48 slots 11 and eight slot insertion portions 21 are housed next to each other in the radial direction in each slot 11. However, the present disclosure is not limited to this. For example, the number of slots in the stator core may be other than 48. The number of slot insertion portions housed in one slot may be other than eight.

### Description of the Reference Numerals

100 ... stator (stator for rotating electrical machine), 20 ... stator coil, 31 ... U1 coil portion (coil portion), 32 ... U2 coil portion (coil portion), 33 ... U3 coil portion (coil portion), 34 ... U4 coil portion (coil portion), 41 ... V1 coil portion (coil portion), 42 ... V2 coil portion (coil portion), 43 ... V3 coil portion (coil portion), 44 ... V4 coil portion (coil portion), 51 ... W1 coil portion (coil portion), 52 ... W2 coil portion (coil portion), 53 ... W3 coil portion (coil portion), 54 ... W4 coil portion (coil portion), 10 ... stator core, 11 ... slot, 21 ... slot insertion portion, 21A ... first slot insertion portion, 21B ... second slot insertion portion, 21C... third slot insertion portion, 22... crossover portion, 61 ... power line terminal, 62 ... neutral line terminal

## Claims

1. A stator for a rotating electrical machine, the stator comprising:
a stator coil in which four or more sets of coil portions for each of phases are connected as a parallel circuit between a neutral line terminal and a power line terminal for each of the phases; and
a stator core that has a plurality of slots and around which the stator coil is wound, wherein:
the stator coil includes
slot insertion portions each inserted in a corresponding one of the plurality of slots, and
a crossover portion exposed from an axial end face of the stator core and extending in a circumferential direction so as to connect a pair of the slot insertion portions; and
in each of the phases, a first slot insertion portion directly connected to the power line terminal out of a plurality of the slot insertion portions in each of the four or more sets is located on a radially outermost side in a corresponding one of the slots on one side in an axial direction of the stator core.

2. The stator for a rotating electrical machine according to claim 1, wherein in each of the phases, a second slot insertion portion directly connected to the neutral line terminal out of the plurality of slot insertion portions in each of the sets is located on the radially outermost side in a corresponding one of the slots on the one side in the axial direction of the stator core.

3. The stator for a rotating electrical machine according to claim 2, wherein in each of the sets for one of the phases in the stator coil, each of the slot insertion portions along a direction of a current flow from the first slot insertion portion to the second slot insertion portion is inserted in a corresponding one of the slots in such a manner that a direction in which a slot number changes is reversed from a first direction to a second direction at least once, the slot number being a number that is given to each of the plurality of slots and that increases relatively in order clockwise or counterclockwise in the circumferential direction of the stator core as viewed in the axial direction, the first direction being one of the following two directions, and the second direction being another of the following two directions: a direction in which the slot number increases, and a direction in which the slot number decreases.

4. The stator for a rotating electrical machine according to claim 3, wherein:
in each of the phases, the plurality of slot insertion portions in each of the sets includes, in addition to the first slot insertion portion and the second slot insertion portion, at least one third slot insertion portion located on a radially innermost side in a corresponding one of the slots; and
in each of the sets, each of the slot insertion portions along the direction of the current flow from the first slot insertion portion to the second slot insertion portion is inserted into a corresponding one of the slots in such a manner that the slot number changes in the first direction from the first slot insertion portion to a first third slot insertion portion in the direction of the current flow and that the slot number changes in the second direction from a last third slot insertion portion in the direction of the current flow to the second slot insertion portion.

5. The stator for a rotating electrical machine according to claim 3, wherein in each of the sets, each of the slot insertion portions along the direction of the current flow from the first slot insertion portion to the second slot insertion portion is inserted into a corresponding one of the slots in such a manner that when the slot number changes in the first direction, a radial position in the slot is shifted radially inward by one turn, and that when the slot number changes in the second direction, the radial position in the slot is shifted radially outward by one turn or the same radial position is maintained.

6. The stator for a rotating electrical machine according to claim 1, further comprising a neutral point busbar that connects a plurality of the neutral line terminals in the stator coil, wherein the neutral point busbar is located axially inward of an axially outermost position of the crossover portion as viewed in a radial direction.

7. The stator for a rotating electrical machine according to any one of claims 1 to 6, wherein the power line terminal is located axially inward of an axially outermost position of the crossover portion as viewed in a radial direction.
